# EUROPEAN PATENT APPLICATION

(11) **EP 4 765 838 A1**
(43) Date of publication of application: **24.06.2026**
(21) Application number: 25214697.2
(22) Date of filing: 10.11.2025
(51) Int. Cl.: H04N 21/472, G11B 27/10, G11B 27/34, H04N 21/482, H04N 21/845

(54) **VIDEO PROCESSING APPARATUS, CONTROL METHOD THEREFOR, AND COMPUTER PROGRAM**

(30) Priority: 19.12.2024 JP 2024223951
(71) Applicant: Canon Kabushiki Kaisha, Tokyo, 146-8501 (JP)
(72) Inventor: OMORI, Noboru, Tokyo, 146-8501 (JP)
(74) Representative: Canon Europe Limited

(57) **Abstract**

A video processing apparatus (10), communicatively connected to an information processing apparatus (12), includes an acquisition unit (102) and a control unit (101). The acquisition unit (102) acquires video designation information when a video to be played back is designated. The control unit (101) controls distribution of the video as a distribution video based on the video designation information and distribution of a map image associated with the distribution video. The map image includes a plurality of regions, each of which is associated with two or more video frames of the distribution video. When a predetermined region is designated from among the regions in the map image, the acquisition unit (102) acquires region designation information regarding the designation of the predetermined region. The control unit (101) distributes, as an associated video, video frames associated with the predetermined region to the information processing apparatus based on the region designation information.

## Description

### TECHNICAL FIELD

The present disclosure relates to a video processing apparatus, a method for controlling the video processing apparatus, a computer program product, and a computer-readable data carrier (non-transitory computer-readable storage medium).

### BACKGROUND

For example, before actually visiting a leisure destination such as a campsite, tourist spot, or amusement park, there may be cases where one wishes to check the conditions or atmosphere of the destination in advance. In such a case, one can view videos (vlogs) uploaded to video streaming platforms, such as YouTube (registered trademark), which capture the conditions or atmosphere of the leisure destination. For example, Japanese Patent Application Laid-Open Publication No. 2023-157630 discloses a device that acquires position information associated with frames constituting video content and controls the playback of the video content based on the position information.

Leisure destinations have numerous attractions, such as facilities and sightseeing spots, that visitors wish to see. However, when visitors check each attraction in advance through a vlog, they need to watch the vlog from beginning to end, i.e., in its entirety. As a result, the checking process takes a considerable amount of time.

### SUMMARY

Embodiments described herein are directed to technology that can reduce the time required to check, in advance, an attraction such as a leisure destination through a video.

The present disclosure in its first aspect provides a video processing apparatus as specified in claim 1. Optional features are specified in claims 2 to 14. These preferable features of the first aspect are also preferable features of the other aspects of the present invention.

The present disclosure in its second aspect provides a control method as specified in claim 15.

The present disclosure in its third aspect provides a computer program as specified in claim 16.

The present disclosure in its fourth aspect provides a computer-readable data carrier having stored thereon the computer program as specified above.

According to the present disclosure, when an attraction such as a leisure facility is checked in advance using a video, the time required for the checking can be reduced.

Features of the present disclosure will become apparent from the following description of embodiments with reference to the attached drawings. The following description of embodiments is described by way of example.

### BRIEF DESCRIPTION OF THE DRAWINGS

Fig. 1 is a block diagram illustrating an example of the hardware configuration of a video processing system according to a first embodiment.
Fig. 2 is a diagram illustrating an example of a map image stored in a storage unit of a corporate terminal.
Fig. 3 is a diagram illustrating an example of a map image stored in a storage unit of a video processing apparatus.
Fig. 4 is a diagram for explaining the association between each region included in the map image and a distribution video.
Fig. 5 is a diagram for explaining the association between each region included in the map image and a distribution video.
Figs. 6A to 6C are flowcharts each illustrating a process performed by the video processing apparatus.
Figs. 7A to 7D are diagrams illustrating an example sequence in which a screen displayed on a display unit of a user terminal changes over time in response to user operations.
Fig. 8 is a diagram illustrating a modification of the screen displayed on the display unit of the user terminal.
Fig. 9 is a flowchart illustrating a modification of the process performed in step S604, which is a subroutine in the flowchart illustrated in Fig. 6A.
Fig. 10 is a diagram for explaining the association between each region included in a map image and a distribution video in a video processing system according to a second embodiment.

### DESCRIPTION OF THE EMBODIMENTS

Example embodiments will be described in detail with reference to the accompanying drawings. It should be noted that the following embodiments are provided for illustrative purposes only and are not intended to limit the scope of the disclosure. While multiple features are described in the embodiments, the disclosure is not limited to embodiments that incorporate all such features. Furthermore, in the drawings, like reference numerals designate like or corresponding parts, and duplicative descriptions thereof are omitted to avoid redundancy.

### First Embodiment

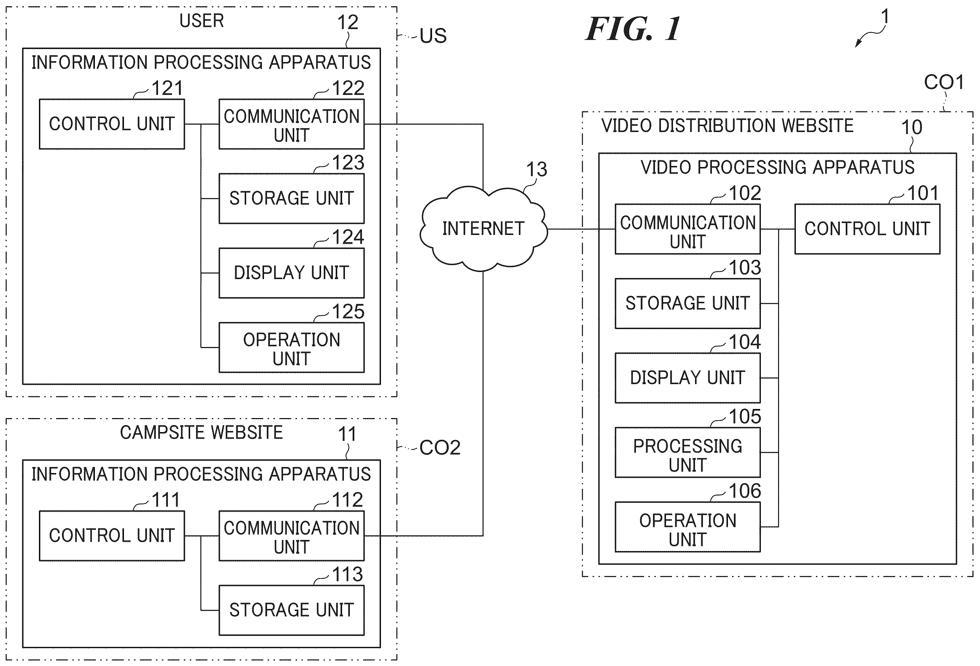

A first embodiment will be described below with reference to Figs. 1 to 9. Fig. 1 is a block diagram illustrating an example of the hardware configuration of a video processing system according to the first embodiment. As illustrated in Fig. 1, a video processing system 1 includes a video processing apparatus 10 owned by a corporation CO1 that operates a video distribution website. The video processing system 1 further includes, in addition to the video processing apparatus 10, an information processing apparatus 11 owned by a corporation CO2 that operates a campsite website (hereinafter referred to as a "corporate terminal"), and an information processing apparatus 12 owned by a user (individual) US (hereinafter referred to as a "user terminal"). The video processing apparatus 10, the corporate terminal 11, and the user terminal 12 are communicatively connected to one another via the Internet 13.

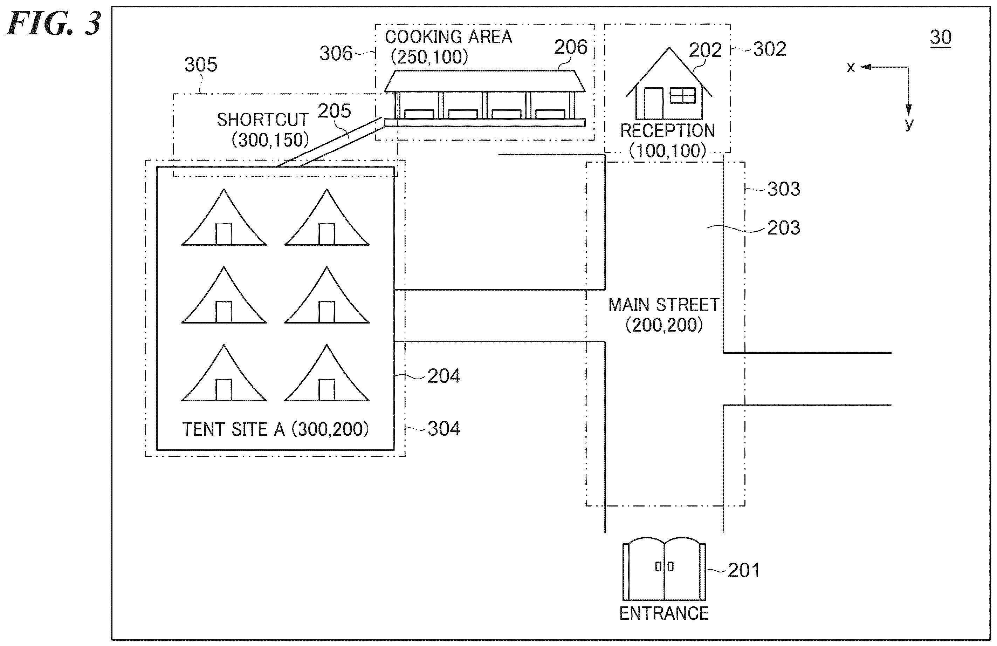

The video processing apparatus 10 is configured to process videos and includes a control unit 101, a communication unit 102, a storage unit 103, a display unit 104, a processing unit 105, and an operation unit 106. The control unit 101 is a controller that controls the overall operation of the video processing apparatus 10, i.e., a computer that controls components such as the communication unit 102 to the operation unit 106. The communication unit 102 is communicatively connected to the Internet 13. Accordingly, information can be transmitted to the corporate terminal 11 and the user terminal 12, or information can be received from the corporate terminal 11 and the user terminal 12. The storage unit 103 stores, for example, various programs and data. The programs include a program that causes the control unit 101 to perform each step (control method of the video processing apparatus) described later. The data include, for example, a map image 30 of a campsite (see Fig. 3). The display unit 104 includes, for example, a liquid crystal display or an organic electroluminescent (EL) display, and configured to display various images. The processing unit 105 performs processing on a map image acquired from the corporate terminal 11 of the campsite website (an external site). This processing will be described later. The operation unit 106 includes an input device such as a keyboard or a mouse. An employee of the corporation CO1 or the like can perform operations on the video processing apparatus 10 using the operation unit 106. The video processing apparatus 10 is not particularly limited and may be, for example, a desktop or notebook personal computer, a tablet device, or the like.

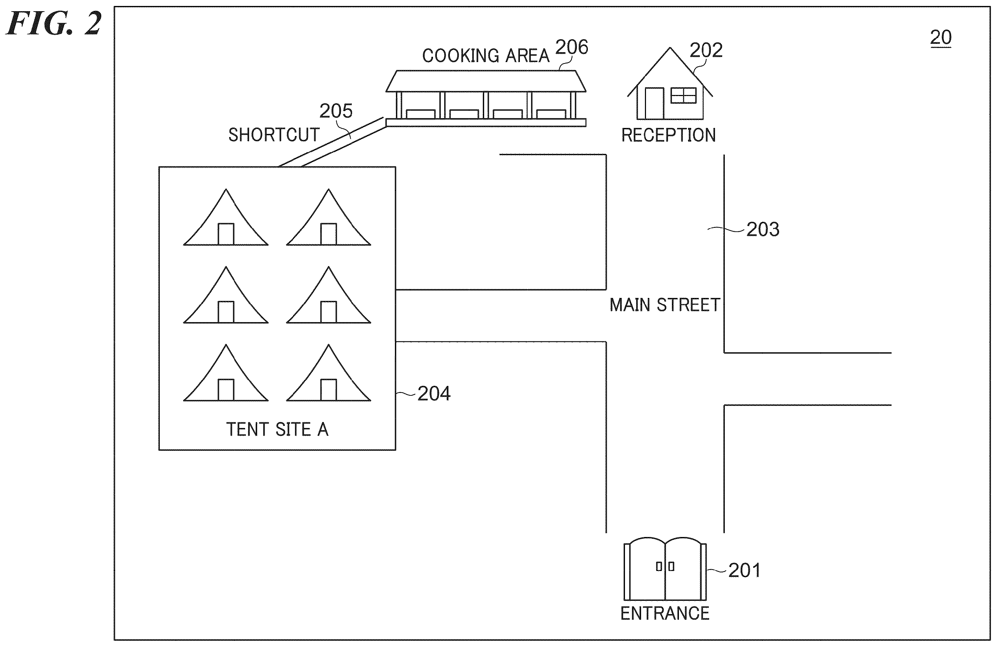

The corporate terminal 11 includes a control unit 111, a communication unit 112, and a storage unit 113. The control unit 111 is a controller that controls the overall operation of the corporate terminal 11, i.e., a computer that controls components such as the communication unit 112 and the storage unit 113. The communication unit 112 is communicatively connected to the Internet 13. Accordingly, information can be transmitted to the video processing apparatus 10 and the user terminal 12, or information can be received from the video processing apparatus 10 and the user terminal 12. The storage unit 113 stores, for example, various programs and data. The data include, for example, a map image 20 of a campsite (see Fig. 2). The corporate terminal 11 is not particularly limited and may be, for example, a desktop or notebook personal computer, a tablet device, or the like.

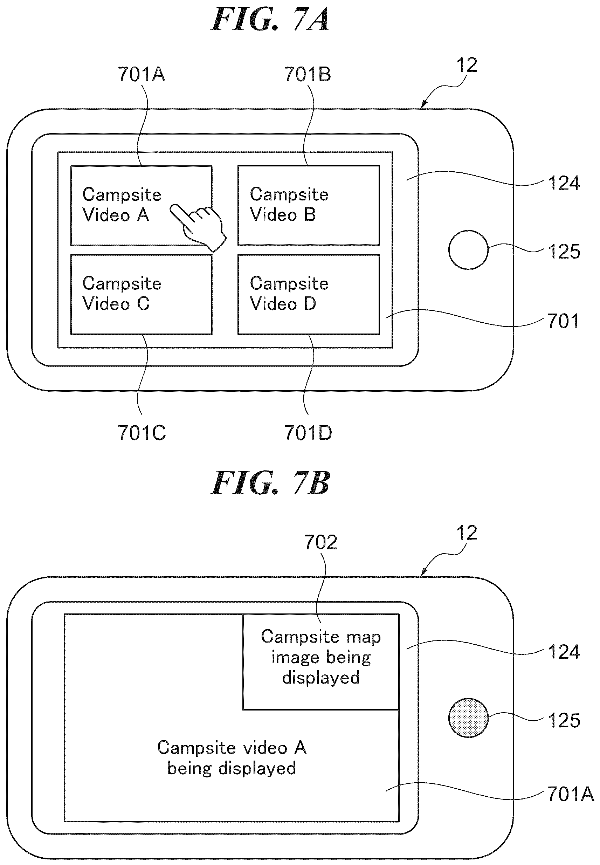

The user terminal 12 includes a control unit 121, a communication unit 122, a storage unit 123, a display unit 124, and an operation unit 125. The control unit 121 is a controller that controls the overall operation of the user terminal 12, i.e., a computer that controls components such as the communication unit 122 to the operation unit 125. The communication unit 122 is communicatively connected to the Internet 13. Accordingly, information can be transmitted to the video processing apparatus 10 and the corporate terminal 11, or information can be received from the video processing apparatus 10 and the corporate terminal 11. The storage unit 123 stores, for example, various programs and data. The display unit 124 includes, for example, a liquid crystal display or an organic EL display, and configured to display various images. The operation unit 125 includes an input device such as a keyboard, a mouse, or a touch panel. The user US can perform operations on the user terminal 12 using the operation unit 125. In this embodiment, the user terminal 12 is assumed to be a smartphone (see Figs. 7A to 7D); however, it is not limited thereto. For example, the user terminal 12 may be a device having an image display function for displaying images, such as a desktop or notebook personal computer, a tablet device, a smartphone, or a head-mounted display.

Fig. 2 is a diagram illustrating an example of a map image stored in the storage unit of the corporate terminal. The map image 20 illustrated in Fig. 2 is a map image (map) of a campsite. The map image 20 includes a campsite entrance 201, a reception 202, a main street 203, a tent site A 204, a shortcut 205, and a cooking area 206. As illustrated in Fig. 2, the campsite entrance 201 and the reception 202 are connected by the main street 203. The cooking area 206 is located adjacent to the reception 202. In addition, the cooking area 206 and the tent site A 204 are connected by the shortcut 205. Although it is a detour, it is also possible to travel between the cooking area 206 and the tent site A 204 via the main street 203. The video processing apparatus 10 can acquire the map image 20 from the corporate terminal 11 through the communication unit 102. Thus, in this embodiment, the communication unit 102 functions as an acquisition unit that acquires information such as the map image 20 from the corporate terminal 11. The communication unit 102 can also acquire information from the user terminal 12. The map image 20 does not necessarily have to be generated by the corporate terminal 11 and may alternatively be generated by the video processing apparatus 10.

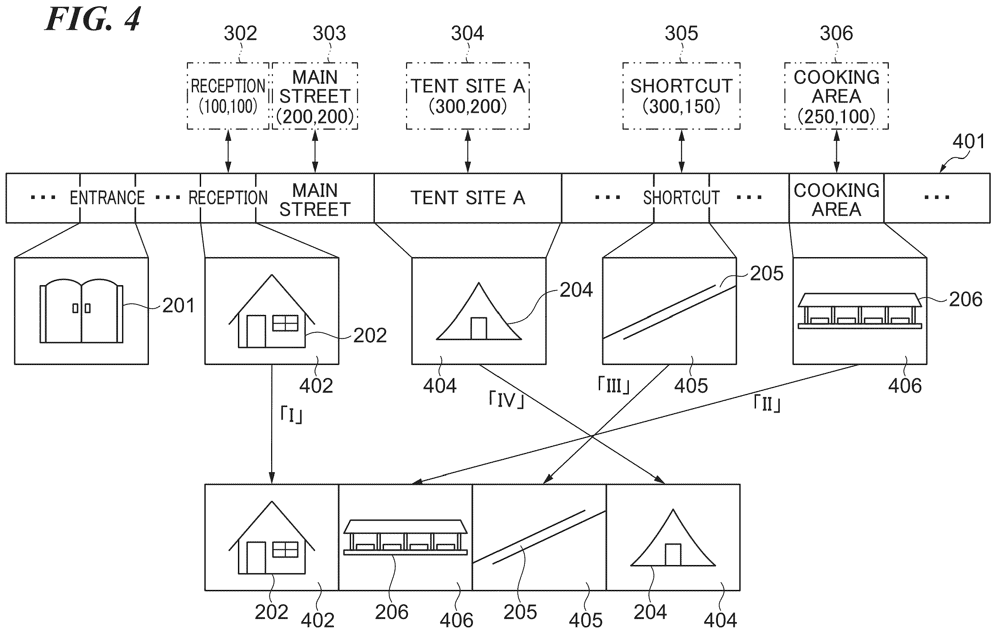

Fig. 3 is a diagram illustrating an example of a map image stored in the storage unit of the video processing apparatus. The map image 30 illustrated in Fig. 3 is an image based on the map image 20 acquired from the corporate terminal 11 (campsite website), i.e., an image obtained by applying processing to the map image 20. The processing is performed on the map image 20 in the processing unit 105 through operations of the operation unit 106 by an employee of the corporation CO1 or the like. As illustrated in Fig. 3, in the map image 30, an x-axis (horizontal axis) and a y-axis (vertical axis), which are perpendicular to each other, are set by the processing unit 105, and a plurality of regions (five regions in the example of Fig. 3) are allocated. The first region is a reception region 302 that includes the reception 202 and is defined as a predetermined range centered at coordinates (100, 100). The second region is a main street region 303 that includes the main street 203 and is defined as a predetermined range centered at coordinates (200, 200). The third region is a tent site region 304 that includes the tent site A 204 and is defined as a predetermined range centered at coordinates (300, 200). The fourth region is a shortcut region 305 that includes the shortcut 205 and is defined as a predetermined range centered at coordinates (300, 150). The fifth region is a cooking area region 306 that includes the cooking area 206 and is defined as a predetermined range centered at coordinates (250, 100). Although five regions are allocated to the map image 30 in this embodiment, the number of regions is not limited to five. There may be one to four, six, or more regions. Additionally, the x-axis and y-axis, the coordinates of each region, and the dash-dot-dot line indicating each region may be displayed in a visible state on the map image 30 or may be hidden. The map image 30 is stored in the storage unit 103 in advance, prior to the distribution of the map image 30 by the control unit 101 (described later). The storage unit 103 stores, along with the map image 30, a distribution video 401 (see Fig. 4).

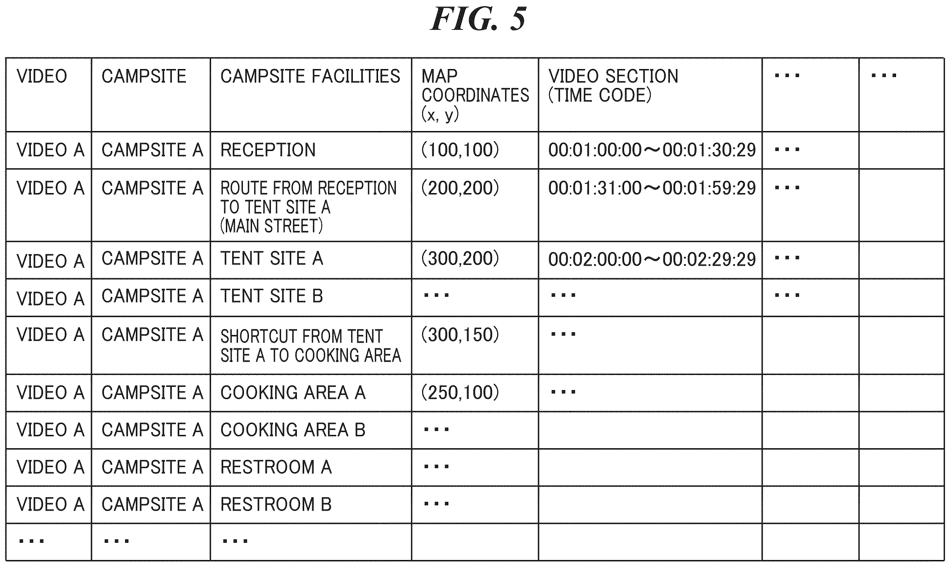

Figs. 4 and 5 are diagrams for explaining the association between each region included in the map image and the distribution video. The distribution video 401 illustrated in Fig. 4 (video A in Fig. 5) is, for example, a video of the campsite captured by an employee of the corporation CO1 or the like. The distribution video 401 can be distributed from the video processing apparatus 10 to the user terminal 12 (the user US side). In the distribution video 401, the entrance 201, the reception 202, the main street 203, the tent site A 204, the shortcut 205, and the cooking area 206 are recorded in this order. The distribution video 401 also includes images other than those of the entrance 201 through the cooking area 206. The distribution video 401 is stored in the storage unit 103 in advance, prior to the distribution of the distribution video 401 by the control unit 101 (described later).

As illustrated in Fig. 4, the reception region 302 is associated with two or more video frames that capture the reception 202, among a plurality of video frames constituting the distribution video 401. As illustrated in Fig. 5, the video frames capturing the reception 202, i.e., the video section "H:M:S:F," correspond to "00:01:00:00 to 00:01:30:29." Here, "H" denotes hours, "M" denotes minutes, "S" denotes seconds, and "F" denotes the frame number. The main street region 303 is associated with two or more video frames that capture the main street 203, among the plurality of video frames constituting the distribution video 401 (see Fig. 4). The video frames capturing the main street 203 correspond to "00:01:31:00 to 00:01:59:29" (see Fig. 5). The tent site region 304 is associated with two or more video frames that capture the tent site A 204, among the plurality of video frames constituting the distribution video 401 (see Fig. 4). The video frames capturing the tent site A 204 correspond to "00:02:00:00 to 00:02:29:29" (see Fig. 5). The shortcut region 305 is associated with two or more video frames that capture the shortcut 205, among the plurality of video frames constituting the distribution video 401 (see Fig. 4). The cooking area region 306 is associated with two or more video frames that capture the cooking area 206, among the plurality of video frames constituting the distribution video 401 (see Fig. 4). Such association process, in which each region is associated with video frames, is performed in the processing unit 105 through, for example, operations of the operation unit 106 by an employee of the corporation CO1 or the like. As a result, the map image 30, which has undergone the association process, is generated. Accordingly, the map image 20, which serves as the basis for the map image 30, is an image in which a plurality of regions have not been allocated, and each of the regions is not associated with two or more video frames among the plurality of video frames constituting the distribution video 401.

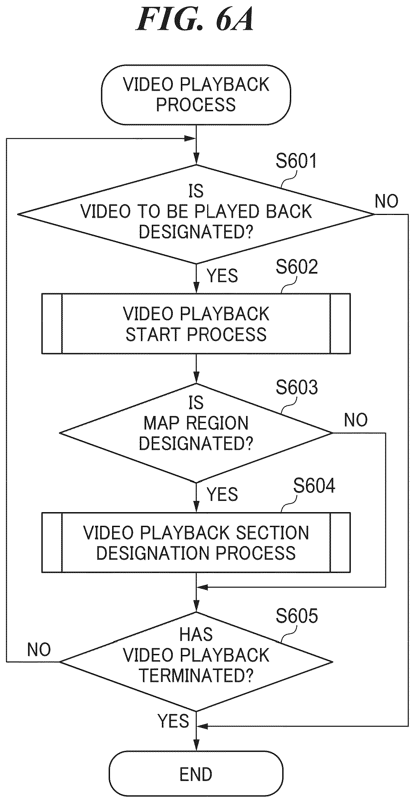

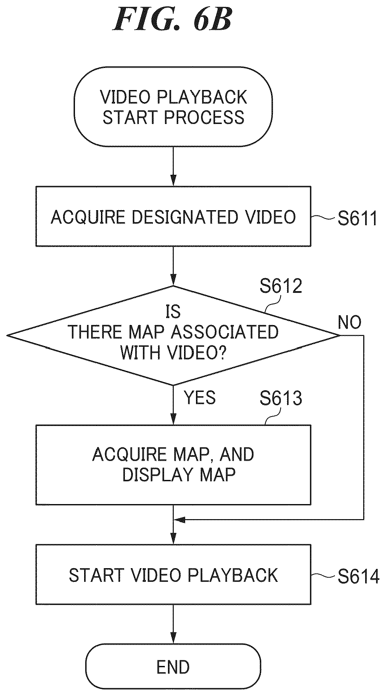

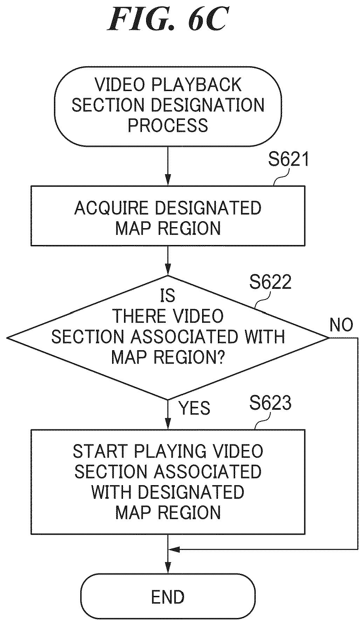

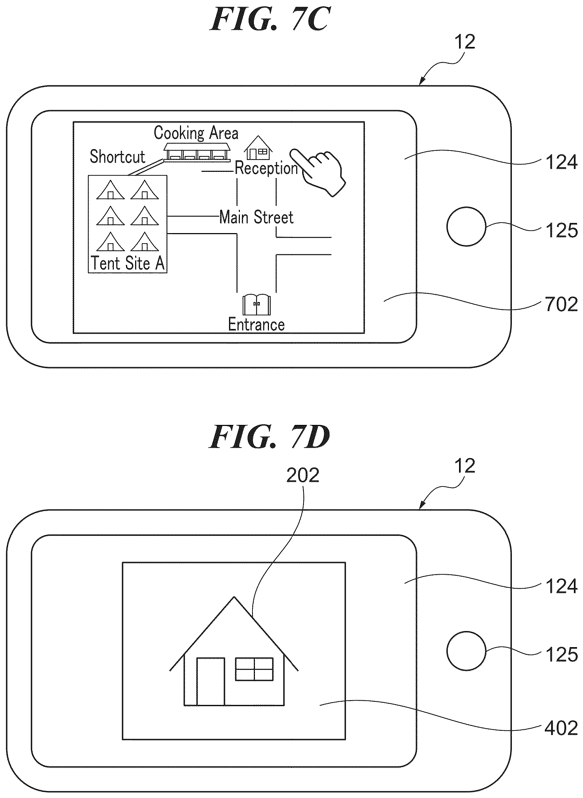

Figs. 6A to 6C are flowcharts each illustrating a process performed by the video processing apparatus. Fig. 6A is a flowchart illustrating the overall process performed by the video processing apparatus. Fig. 6B is a flowchart illustrating the process performed in step S602, which is a subroutine in the flowchart illustrated in Fig. 6A. Fig. 6C is a flowchart illustrating the process performed in step S604, which is a subroutine in the flowchart illustrated in Fig. 6A. Figs. 7A to 7D are diagrams illustrating an example sequence in which a screen displayed on the display unit of the user terminal changes over time in response to user operations. Fig. 7A is a diagram illustrating a state in which a video to be played back is designated on the user terminal. Fig. 7B is a diagram illustrating a state during video playback on the user terminal. Fig. 7C is a diagram illustrating a state in which a desired region is designated from a map image on the user terminal. Fig. 7D is a diagram illustrating a state during playback of a video corresponding to the desired region on the user terminal.

As illustrated in Fig. 6A, in step S601, the control unit 101 of the video processing apparatus 10 determines whether a video to be played back on the user terminal 12, i.e., a video desired to be displayed on the user terminal 12, has been designated. This determination is made based on video designation information regarding the designation of the playback video. If it is determined in step S601 that a video to be played back has been designated, the process proceeds to step S602. On the other hand, if it is determined in step S601 that no playback video has been designated, the process ends.

The video designation information will now be described. As illustrated in Fig. 7A, a menu screen 701 is displayed on the display unit 124 of the user terminal 12. The menu screen 701 includes a video 701A of campsite A, a video 701B of campsite B, a video 701C of campsite C, and a video 701D of campsite D, each of which can be played back on the user terminal 12. The videos 701A to 701D are each managed by the video processing apparatus 10. The user US may select, for example, the video 701A from among the videos 701A to 701D as a video desired for playback on the user terminal 12. The information regarding this selection is transmitted as video designation information from the communication unit 122 of the user terminal 12 and received by the communication unit 102 of the video processing apparatus 10. The control unit 101 then makes the determination in step S601 based on the video designation information.

As illustrated in Fig. 6A, in step S602, the control unit 101 performs a video playback start process. The video playback start process will be described later with reference to Fig. 6B. As a result of this process, as illustrated in Fig. 7B, the display unit 124 of the user terminal 12 plays back the video 701A of campsite A and also displays a map image 702 of campsite A described above. Although Fig. 7B illustrates an example in which the map image 702 is arranged in the upper right corner of the video 701A, the position of the map image 702 is not particularly limited. For example, the map image 702 may be located in the description section of the video 701A. In this embodiment, the video 701A corresponds to the distribution video 401 described above, and the map image 702 corresponds to the map image 30 that includes the campsite (location) where the distribution video 401 was captured.

As illustrated in Fig. 6A, in step S603, the control unit 101 determines whether a desired (predetermined) region, i.e., a map region for which video playback is desired, has been designated on the map image 702 displayed on the user terminal 12. This determination is made based on region designation information regarding the designation of the region. If it is determined in step S603 that a map region has been designated, the process proceeds to step S604. On the other hand, if it is determined in step S603 that no map region has been designated, the process proceeds to step S605.

The region designation information will now be described. As illustrated in Fig. 7C, the map image 702 (map image 30) is displayed on the display unit 124 of the user terminal 12. The user US can select, for example, the reception region 302 as a region for video playback on the user terminal 12, from among the regions ranging from the reception region 302 to the cooking area region 306 included in the map image 702. The information regarding this selection is transmitted as region designation information from the communication unit 122 of the user terminal 12 and received by the communication unit 102 of the video processing apparatus 10. The control unit 101 then makes the determination in step S603 based on the region designation information.

As illustrated in Fig. 6A, in step S604, the control unit 101 performs a video playback section designation process. The video playback section designation process will be described later with reference to Fig. 6C. As a result of this process, as illustrated in Fig. 7D, the display unit 124 of the user terminal 12 plays back a video of the reception region 302, i.e., a video capturing the reception 202.

As illustrated in Fig. 6A, in step S605, the control unit 101 determines whether the termination of video playback has been designated on the user terminal 12. This determination is made based on playback termination designation information transmitted from the communication unit 122 of the user terminal 12 and received by the communication unit 102 of the video processing apparatus 10. The playback termination designation information is generated, for example, in response to an operation of a video stop button on the user terminal 12, or in response to an operation for transitioning to another video. If it is determined in step S605 that the termination of video playback has been designated, the process ends. On the other hand, if it is determined that the termination of video playback has not been designated, the process returns to step S601, and the subsequent steps are performed in sequence.

Next, the video playback start process will be described with reference to Fig. 6B. As illustrated in Fig. 6B, in step S611, the control unit 101 acquires, from among the videos 701A to 701D stored in the storage unit 103, the designated video (e.g., the video 701A) based on the video designation information.

In step S612, the control unit 101 determines whether there is a map image, i.e., the map image 702 (map image 30), associated with the video 701A (distribution video 401) acquired in step S611. Thus, in this embodiment, the control unit 101 also functions as a map determination unit that determines the presence or absence of a map image associated with the video. Note that, in the video processing apparatus 10, a portion functioning as the map determination unit may be provided separately from the control unit 101. If it is determined in step S612 that the map image 702 is present, the process proceeds to step S613. On the other hand, if it is determined in step S612 that the map image 702 is not present, the process proceeds to step S614. In cases where it is determined that the map image 702 is not present, the control unit 101 may perform control to display an indication to that effect on the user terminal 12.

In step S613, the control unit 101 acquires the map image 702 stored in the storage unit 103. Subsequently, the control unit 101 controls the communication unit 102 to deliver or distribute this map image 702 to the user terminal 12. As a result, the map image 702 can be displayed on the user terminal 12.

In step S614, the control unit 101 controls the communication unit 102 to distribute the video 701A acquired in step S611 to the user terminal 12. As a result, the video 701A can be played back on the user terminal 12. Note that the order of steps S613 and S614 may be reversed.

Next, the video playback section designation process will be described with reference to Fig. 6C. As illustrated in Fig. 6C, in step S621, the control unit 101 acquires the designated map region (e.g., the reception region 302) based on the region designation information.

In step S622, the control unit 101 determines whether there is a video frame (video section) associated with the reception region 302 acquired in step S621, i.e., whether a video of the reception region 302 is present. Thus, in this embodiment, the control unit 101 also functions as a video determination unit that determines the presence or absence of a video associated with the map region (hereinafter referred to an "associated video"). Note that, in the video processing apparatus 10, a portion functioning as the video determination unit may be provided separately from the control unit 101. Additionally, the video associated with the reception region 302 is referred to as "associated video 402" (see Fig. 4). The video associated with the tent site region 304 is referred to as "associated video 404." The video associated with the shortcut region 305 is referred to as "associated video 405." The video associated with the cooking area region 306 is referred to as "associated video 406." If it is determined in step S622 that the associated video 402 is present, the process proceeds to step S623. On the other hand, if it is determined in step S622 that the associated video 402 is not present, the process ends.

In step S623, the control unit 101 controls the communication unit 102 to distribute the associated video 402 stored in the storage unit 103 to the user terminal 12. As a result, the associated video 402 can be played back on the user terminal 12.

Next, image display on the user terminal 12 will be described. This image display is performed under the control of the control unit 101 of the video processing apparatus 10. When the associated video 402 is distributed from the video processing apparatus 10 while the distribution video 401 is being displayed on the display unit 124, the user terminal 12 receives the associated video 402 and temporarily suspends the display of the distribution video 401. The associated video 402 is then displayed on the display unit 124, instead of the distribution video 401 (see Fig. 7D). As a result, when the reception 202 of the campsite is checked in advance through the distribution video 401, the associated video 402 is quickly displayed, thereby reducing the time required to check the reception 202. After playback of the associated video 402 ends, the distribution video 401 is displayed again. At this time, the distribution video 401 may be played back with the portion corresponding to the associated video 402 having been skipped.

### First Modification

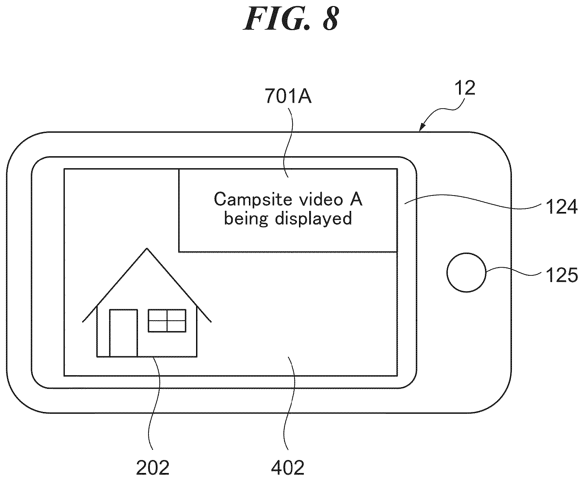

A first modification of the first embodiment will be described. Fig. 8 is a diagram illustrating a modification of the screen displayed on the display unit of the user terminal. When the associated video 402 is distributed from the video processing apparatus 10 while the distribution video 401 is being displayed on the display unit 124, the user terminal 12 receives the associated video 402 while maintaining the display state (playback state) of the distribution video 401. As illustrated in Fig. 8, the associated video 402 is then displayed on the display unit 124, with the distribution video 401 positioned in the upper-right corner of the associated video 402. As a result, both the distribution video 401 and the associated video 402 can be viewed simultaneously. In addition, the associated video 402 can be viewed preferentially over the distribution video 401.

### Second Modification

Next, a second modification of the first embodiment will be described. As described above, the map image 30 includes the reception region 302 to the cooking area region 306. As illustrated in Fig. 4, when the regions are designated or selected in the order of the reception region 302, the cooking area region 306, the shortcut region 305, and the tent site region 304, the region designation information includes information regarding the designation of the reception region 302 to the cooking area region 306 (a plurality of predetermined regions). In this case, the control unit 101 distributes the associated videos in the order of the region selection; that is, the associated videos 402, 406, 405, and 404 are distributed in this order. As a result, the associated videos 402, 406, 405, and 404 are displayed consecutively in this order on the user terminal 12.

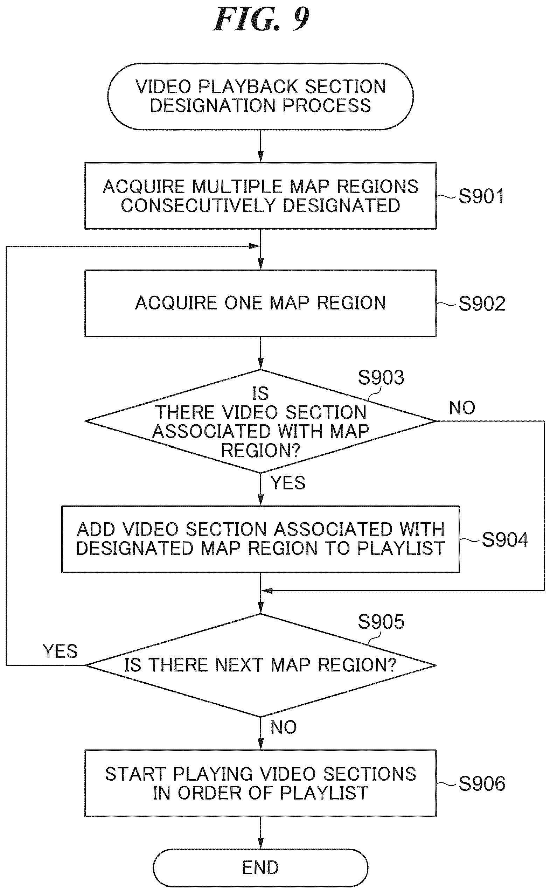

Fig. 9 is a flowchart illustrating a modification of the process performed in step S604, which is a subroutine in the flowchart illustrated in Fig. 6A. The control for consecutively displaying the aforementioned associated videos 402, 406, 405, and 404 is based on the flowchart illustrated in Fig. 9. As illustrated in Fig. 9, in step S901, the control unit 101 acquires information regarding the designation of the reception region 302 to the cooking area region 306 as region designation information.

In step S902, the control unit 101 selects and acquires, one by one, the information for each region in the order of designation from among the information regarding the designation of the reception region 302 to the cooking area region 306 acquired in step S901.

In step S903, the control unit 101 determines whether there is an associated video associated with the region acquired in step S902. If it is determined in step S903 that an associated video is present, the process proceeds to step S904. On the other hand, if it is determined in step S903 that no associated video is present, the process proceeds to step S905.

In step S904, the control unit 101 adds the associated video determined to be present in step S903 to the playlist of videos to be played back on the user terminal 12. The playlist is stored in advance in the storage unit 103.

In step S905, the control unit 101 determines whether there is information for any region that has not yet been selected up to step S904, among the information regarding the designation of the reception region 302 to the cooking area region 306 acquired in step S901. If it is determined in step S905 that unselected information is present, the process returns to step S902 and the subsequent steps are performed in sequence. On the other hand, if it is determined in step S905 that no unselected information is present, the process proceeds to step S906.

In step S906, the control unit 101 distributes the videos added to the playlist to the user terminal 12 in the order they were added. As a result, the associated videos can be played back consecutively in order on the user terminal 12.

### Third Modification

Next, a third modification of the first embodiment will be described. This modification is an example in which, while an associated video (hereinafter referred to as a "first associated video") is displayed on the user terminal 12, another associated video different from the first associated video (hereinafter referred to as a "second associated video") is distributed from the video processing apparatus 10. As for the first associated video, two cases are conceivable. The first case (hereinafter "Case 1") is when the first associated video is one designated by region selection. The second case (hereinafter "Case 2") is when the first associated video is not a video designated by region selection, but rather one of distribution videos sequentially displayed according to the playback flow. The second associated video is a video designated by region selection. In Case 1, after the first associated video being displayed on the user terminal 12 ends, the second associated video is displayed. In Case 2, even if the first associated video being displayed on the user terminal 12 has not ended, the second associated video is displayed in place of the first associated video. By switching the display mode of the second associated video in this manner, for example, in Case 2, it is possible to suppress unnecessary display of the first associated video, enabling a rapid transition to the display of the second associated video.

### Second Embodiment

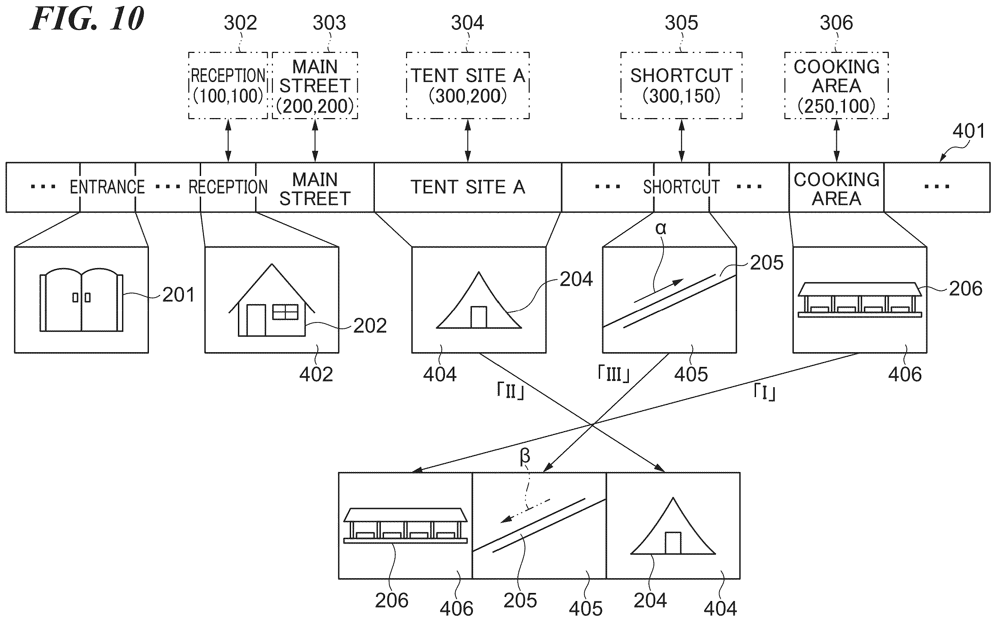

A second embodiment will be described below with reference to Fig. 10, focusing on differences from the previously described embodiment without repeating the same explanations. Fig. 10 is a diagram for explaining the association between each region included in a map image and a distribution video in the video processing system according to the second embodiment. As illustrated in Fig. 10, when the regions are designated in the order of the cooking area region 306, the shortcut region 305, and the tent site region 304, the region designation information includes information regarding the designation of the tent site region 304 to the cooking area region 306. In this case, if the cooking area region 306 is defined as a "first region" and the tent site region 304 is defined as a "second region," then the shortcut region 305 can be defined as a "third region" located between the first region and the second region. The associated video 406 is a first associated video associated with the first region, and the associated video 404 is a second associated video associated with the second region. The associated video 405 is a third associated video associated with the third region and can be treated as an image indicating movement from the cooking area region 306 (the first region) to the tent site region 304 (the second region).

As described above, since the distribution video 401 is a video capturing, in sequence, the entrance 201, the reception 202, the main street 203, the tent site A 204, the shortcut 205, and the cooking area 206, the associated video 405 depicts the movement of the camera operator in the direction of arrow α. On the other hand, in this embodiment, the regions have been designated in the order of the cooking area region 306, the shortcut region 305, and the tent site region 304, and therefore the user US imagines moving in the order of the cooking area region 306, the shortcut region 305, and the tent site region 304. Accordingly, when controlling the distribution of the associated video 405, the control unit 101 performs control such that the associated video 405 can be displayed in reverse playback. This causes the associated video 405 to depict movement in the direction of arrow β, opposite to arrow α, thereby allowing the user US to feel as if they are moving from the cooking area 206 to the tent site A 204 via the shortcut 205. Note that, in this embodiment, the display of the associated video 405 is not limited to reverse playback; for example, among the video frames constituting the associated video 405, a plurality of video frames taken at intervals may be displayed as reverse playback still images.

### Modification

Next, a modification of the second embodiment will be described. In this modification, when the regions are designated in the order of the cooking area region 306 and the tent site region 304, the region designation information includes information regarding the designation of the tent site region 304 and the cooking area region 306. In this case, the cooking area region 306 is defined as a "first region," and the tent site region 304 is defined as a "second region." Additionally, the shortcut region 305, located between the first region and the second region, can be defined as a "third region." The associated video 406 is a first associated video associated with the first region, and the associated video 404 is a second associated video associated with the second region. The associated video 405 is a third associated video associated with the third region and can be treated as an image present between the cooking area region 306 (the first region) and the tent site region 304 (the second region). The control unit 101 performs control to distribute the associated video 405 after distributing the associated video 406 and before distributing the associated video 404. As a result, the user US can also check the state or appearance of the shortcut 205, which they will take when moving from the cooking area 206 to the tent site A 204.

Note that the external site to which the video processing apparatus 10 is communicatively connected is not limited to a campsite website. For example, the external site may also be a website of a leisure destination such as a tourist spot or an amusement park. In addition, the number of external sites to which the video processing apparatus 10 is communicatively connected is not limited to one, and there may be a plurality of such websites.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments, but is defined by the scope of the following claims.

## Claims

1. A video processing apparatus (10) configured to be communicatively connected to an information processing apparatus (12) having an image display function for displaying images, the apparatus (10) comprising:
an acquisition unit (102) configured to acquire, when a video to be played back on the information processing apparatus (12) is designated, video designation information regarding designation of the video; and
a control unit (101) configured to distribute the video to the information processing apparatus (12) as a distribution video (701A, 401) based on the video designation information, and to distribute a map image (702, 30) associated with the distribution video to the information processing apparatus (12), the map image including a location where the distribution video was captured, wherein
the map image includes a plurality of regions (302, 303, 304, 305, 306) allocated therein, and each of the regions is associated with two or more video frames among a plurality of video frames constituting the distribution video,
when a predetermined region is designated from among the plurality of regions in the map image on the information processing apparatus (12), the acquisition unit (102) acquires region designation information regarding designation of the predetermined region, and
the control unit (101) distributes, as an associated video (402, 404, 405, 406), video frames associated with the predetermined region to the information processing apparatus (12) based on the region designation information.

2. The video processing apparatus (10) according to claim 1, further comprising a storage unit (103) configured to store the distribution video and the map image in advance prior to distribution of the distribution video and the map image.

3. The video processing apparatus (10) according to claim 2, wherein the storage unit (103) stores, as the map image, an image based on an image (20) acquired from an external site.

4. The video processing apparatus (10) according to claim 3, wherein the image (20) acquired from the external site does not include the plurality of regions allocated therein, the apparatus further comprising:
a processing unit (105) configured to generate the map image (30) by allocating the plurality of regions to the image (20) acquired from the external site and associating each of the regions with two or more video frames among the plurality of video frames constituting the distribution video.

5. The video processing apparatus (10) according to any one of claims 1 to 4, further comprising a map determination unit (101) configured to determine whether there is a map image associated with the distribution video, prior to distribution of the map image,
wherein, when the map determination unit (101) determines that there is a map image associated with the distribution video, the control unit (101) distributes the map image.

6. The video processing apparatus (10) according to any one of claims 1 to 5, further comprising a video determination unit (101) configured to determine whether there is an associated video, prior to distribution of the associated video,
wherein, when the video determination unit (101) determines that there is an associated video, the control unit (101) distributes the associated video.

7. The video processing apparatus (10) according to any one of claims 1 to 6, wherein, when the control unit (101) distributes the associated video while the distribution video is being displayed on the information processing apparatus (12), the control unit (101) performs control such that the information processing apparatus (12) temporarily suspends display of the distribution video and displays the associated video.

8. The video processing apparatus (10) according to any one of claims 1 to 7, wherein, when the associated video is displayed on the information processing apparatus (12) while display of the distribution video is temporarily suspended, the control unit (101) performs control such that the information processing apparatus (12) resumes display of the distribution video after display of the associated video is completed.

9. The video processing apparatus (10) according to claim 8, wherein, when resuming display of the distribution video, the control unit (101) performs control such that the information processing apparatus (12) does not display a section of the distribution video corresponding to the associated video.

10. The video processing apparatus (10) according to any one of claims 1 to 9, wherein, when the region designation information includes information regarding designation of a plurality of predetermined regions, the control unit (101) distributes, in sequence, associated videos each associated with one of the predetermined regions.

11. The video processing apparatus (10) according to claim 10, wherein the control unit (101) performs control such that the information processing apparatus (12) consecutively displays, in sequence, the associated videos associated with the predetermined regions.

12. The video processing apparatus (10) according to any one of claims 1 to 11, wherein, when the control unit (101) distributes another associated video different from the associated video while the associated video is being displayed on the information processing apparatus (12), the control unit (101) performs control such that the information processing apparatus (12) displays the other associated video after display of the associated video is completed.

13. The video processing apparatus (10) according to any one of claims 1 to 12, wherein
in the map image, the plurality of regions includes a first region, a second region, and a third region located between the first region and the second region,
the acquisition unit (102) acquires, as the region designation information, information regarding designation of the first region and information regarding designation of the second region, and thereafter acquires information regarding designation of the third region, and
the control unit (101) distributes, as associated videos, a first associated video associated with the first region, a third associated video associated with the third region, and a second associated video associated with the second region in this order.

14. The video processing apparatus (10) according to claim 13, wherein
the third associated video is an image indicating movement from the first region to the second region, and
when distributing the third associated video, the control unit (101) performs control to allow the third associated video to be displayed in reverse playback.

15. A method for controlling a video processing apparatus (10) configured to be communicatively connected to an information processing apparatus (12) having an image display function for displaying images, the method comprising:
acquiring (S601), when a video to be played back on the information processing apparatus (12) is designated, video designation information regarding designation of the video; and
distributing (S602) the video to the information processing apparatus as a distribution video (701A, 401) based on the video designation information, and distributing a map image (702, 30) associated with the distribution video to the information processing apparatus (12), the map image including a location where the distribution video was captured,
wherein the map image includes a plurality of regions (302, 303, 304, 305, 306) allocated therein, and each of the regions is associated with two or more video frames among a plurality of video frames constituting the distribution video,
the method further comprising:
acquiring (S603) region designation information regarding designation of a predetermined region when the predetermined region is designated from among the plurality of regions in the map image on the information processing apparatus (12); and
distributing (S604), as an associated video (402, 404, 405, 406), video frames associated with the predetermined region to the information processing apparatus (12) based on the region designation information.

16. A computer program comprising instructions which, when the program is executed by a computer, cause the computer to carry out the method of claim 15.
